# EUROPEAN PATENT APPLICATION

(11) **EP 2 927 034 A2**
(43) Date of publication of application: **07.10.2015**
(21) Application number: 15159854.7
(22) Date of filing: 19.03.2015
(51) Int. Cl.: B60J 7/22

(54) **Deflector device for vehicle**

(30) Priority: 31.03.2014 JP 2014074626
(71) Applicant: AISIN SEIKI KABUSHIKI KAISHA, Kariya-shi, Aichi-ken 448-8650 (JP)
(72) Inventor: Kokubo, Yusuke, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

A deflector device (20) for a vehicle includes a wind deflecting member (21) provided along a front rim portion at an opening (10a) formed on a roof (10) to extend in a vehicle width direction, a pair of torsion springs (26) made from metal-made wires and attached to opposite ends of the wind deflecting member (21) in the vehicle width direction, respectively, each of the torsion springs (26) including a first leg portion extending in a rearward direction and serving as an arm portion (28) rotatably connected to the roof (10) at a rear end of the arm portion (28), and a second leg portion serving as a transmission portion (29) elastically in contact with the roof (10) to transmit a biasing force to protrude the wind deflecting member (21) higher than an upper surface of the roof (10).

## Description

### TECHNICAL FIELD

This disclosure generally relates to a deflector device for a vehicle.

### BACKGROUND DISCUSSION

A known deflector device for a vehicle is disclosed in JP2010-280326A (hereinafter referred to as Patent reference 1). The known deflector device disclosed in Patent reference 1 includes a wind deflecting portion provided extending in a width direction of the vehicle along a front rim portion at an opening formed on a vehicle roof, a pair of arm portions extending in a rearward direction from opposite ends of the wind deflecting portion in the width direction of the vehicle, respectively, the arm portions rotatably connected to the roof, and a pair of torsion springs biasing the wind deflecting portion to protrude above an upper surface of the roof.

The disclosure in Patent reference 1 indicates that members, for example, the arm portions are made of resin because the arm portions are continuously formed with the wind deflecting portion. In order to overcome the lack of strength because of resin-made structure, a considerable dimension in cross-section is ensured at each of the arm portions. Thus, the space occupied by the arm portions increases and the deflector device for the vehicle is increased in size.

A need thus exists for a downsized deflector device for a vehicle.

### SUMMARY

In light of the foregoing, the disclosure provides a deflector device for a vehicle, which includes a wind deflecting member provided along a front rim portion at an opening formed on a roof to extend in a vehicle width direction, a pair of torsion springs made from metal-made wires and attached to opposite ends of the wind deflecting member in the vehicle width direction, respectively, each of the torsion springs including a first leg portion extending in a rearward direction and serving as an arm portion rotatably connected to the roof at a rear end of the arm portion, and a second leg portion serving as a transmission portion elastically in contact with the roof to transmit a biasing force to protrude the wind deflecting member higher than an upper surface of the roof.

According to the construction of the disclosure, because each of the arm portions is formed with one of the leg portion of the torsion spring made from the metal-made wire, the cross sectional dimension of the arm portion can be further reduced without causing a lack of the strength. Thus, the space occupied by the arm portions can be reduced, and the deflector device for the vehicle can be downsized.

According to another aspect of the disclosure, the deflector device for the vehicle includes a stopper portion provided at the roof and restricting a sliding movement of the transmission portion at a predetermined position where the wind deflecting member protrudes higher than the upper surface of the roof. The transmission portion transmits the biasing force to protrude the wind deflecting member higher than the upper surface of the roof while sliding on the roof.

According to the disclosure, because the sliding motion of each of the transmission portion is restricted at the predetermined position where the wind deflecting member protrudes higher than the upper surface of the roof, the attitude of the wind deflecting member in the deployment state can be further stabilized.

According to still another aspect of the disclosure, the torsion spring includes a coil portion that is accommodated in the wind deflecting member.

According to further aspect of the disclosure, the wind deflecting member includes an upper frame and a lower frame that extends along the front rim portion at the opening in the vehicle width direction, and a mesh member having opposite end portions in a transverse direction being placed on the upper frame and the lower frame, respectively.

According to the still another aspect of the disclosure, the torsion spring is attached to the upper frame, the lower frame is fixed to the roof, and the wind deflecting member is protruded to be higher than the upper surface of the roof by expanding the mesh member in response to moving the upper frame upward by means of the biasing force of the torsion spring.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view showing a roof for a vehicle to which a deflector device for a vehicle is applied according to an embodiment disclosed here;
Fig. 2 is a plane view of the deflector device for the vehicle according to the embodiment disclosed here;
Fig. 3A is a perspective view viewing the deflector device for the vehicle from an upper rear direction;
Fig. 3B is a perspective view viewing the deflector device for the vehicle from a rear bottom direction;
Fig. 4A is a partial plane view of the deflector device for the vehicle according to the embodiment disclosed here;
Fig. 4B is a cross-sectional view of the deflector device for the vehicle taken on line 4B-4B shown in Fig. 4A;
Fig. 4C is a cross-sectional view of the deflector device for the vehicle taken on line 4C-4C shown in Fig. 4A;
Fig. 4D is a cross-sectional view of the deflector device for the vehicle taken on line 4D-4D shown in Fig. 4A;
Fig. 5 is a schematic front view of a deflector device for a vehicle according to another embodiment disclosed here.

### DETAILED DESCRIPTION

Embodiments of a deflector device for a vehicle will be explained with reference to illustrations of drawing figures as follows. Hereinafter, a front-rear direction of the vehicle is referred to as a front-rear direction, and an upward and downward corresponding to a height direction of the vehicle are referred to as an upward and downward, respectively. Further, an inner side of the vehicle in a vehicle width direction towards an inward of a passenger compartment is referred to as a vehicle inner side. An outer side of the vehicle in the vehicle width direction towards an outward of the passenger compartment is referred to as a vehicle outer side.

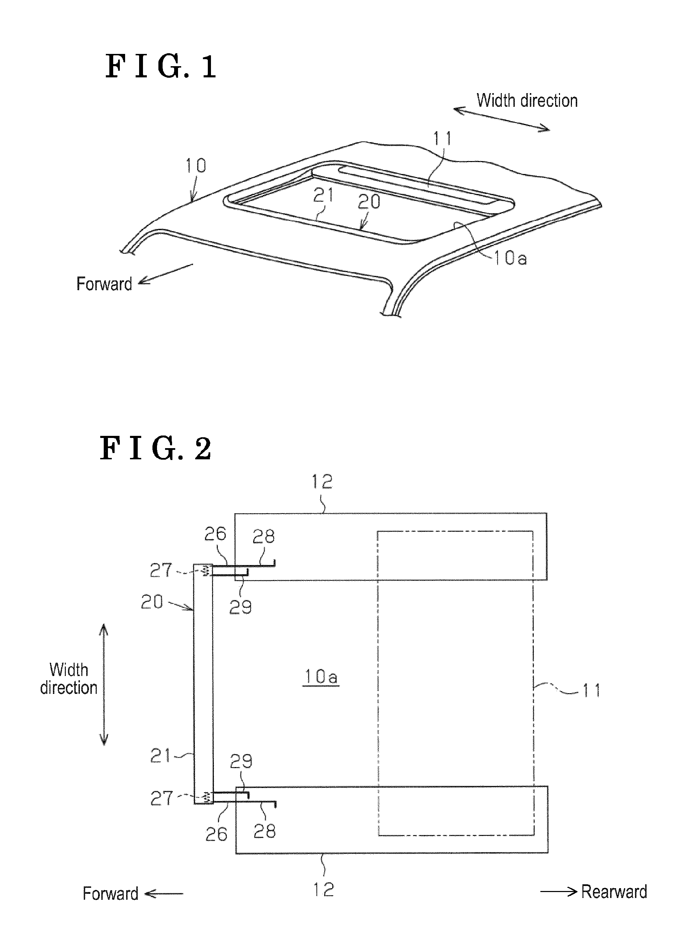

As illustrated in Fig. 1, an opening 10a having a substantially quadrilateral configuration is formed on a roof 10 of a vehicle, for example, an automobile. A deflector device 20 for the vehicle that extends in the vehicle width direction along a front rim portion of the opening 10a is supported at the roof 10. Further, a movable panel 11 is supported at the roof 10 in a manner being movable in a front-rear direction. The movable panel 11 is formed in a substantially quadrilateral configuration and made from, for example, glass plate. The movable panel 11 opens and closes the opening 10a in response to the motion in a front-rear direction.

The deflector device 20 for the vehicle is connected to the roof 10 to be rotatable about an axis extending in the vehicle width direction at opposite end portions of the vehicle in the vehicle width direction. The deflector device 20 for the vehicle includes a wind deflecting member 21, for example, made of resin and provided along a front rim portion at the opening 10a to extend in the vehicle width direction. The deflector device 20 for the vehicle is attached to the roof 10 so as to perform a tilt-up operation, that is, the wind deflecting member 21 moves, or pivots upward in response to the rotation of the deflector device 20 about a connecting portion relative to the roof 10 at the opposite ends of the vehicle in the width direction. In response to an opening operation of the movable panel 11, the wind deflecting member 21 is released from the movable panel 11 and moves upward, or tilts to protrude above an upper surface of the roof 10 (deployment state). In response to a closing operation of the movable panel 11, the wind deflecting member 21 is caught, or pushed by the movable panel 11 to be accommodated under the top surface of the roof 10 (stored state). The deflector device 20 for the vehicle establishes a deployment state when opening the opening 10a, thus preventing air vibration, or aerial vibration caused by the introduction of the wind into the passenger compartment from occurring.

As illustrated in Fig. 2, a pair of guide rails 12, for example, made from an extrusion molding member made of aluminum alloy, are disposed and fixed to the opposite end portions at the opening 10a in the vehicle width direction, respectively. The deflector device 20 for the vehicle is provided with a pair of torsion springs 26 made from an iron-made wire. The torsion springs 26 are attached to opposite ends of the wind deflecting member 21 in the vehicle width direction, respectively. Each of the torsion springs 26 includes a coil portion 27 that it attached to an end of the wind deflecting member 21 in the vehicle width direction. The coil portion 27 generates a biasing force to protrude the wind deflecting member 21 to be higher than, or to be positioned above the upper surface of the roof 10. One of leg portions of the torsion spring 26 connected to an end of the coil portion 27 provided at a vehicle outward side corresponds to an arm portion 28 that extends rearwardly and that is rotatably connected to the guide rail (roof 10) at a rear end of the arm portion 28. Further, the other of the leg portions of the torsion spring 26 connected to an end of the coil portion 27 provided at a vehicle inward side corresponds to a transmission portion 29 that comes to elastically contact with the guide rail 12 (roof 10) to protrude the wind deflecting member 21 to be higher than, or to be positioned above the upper surface of the roof 10.

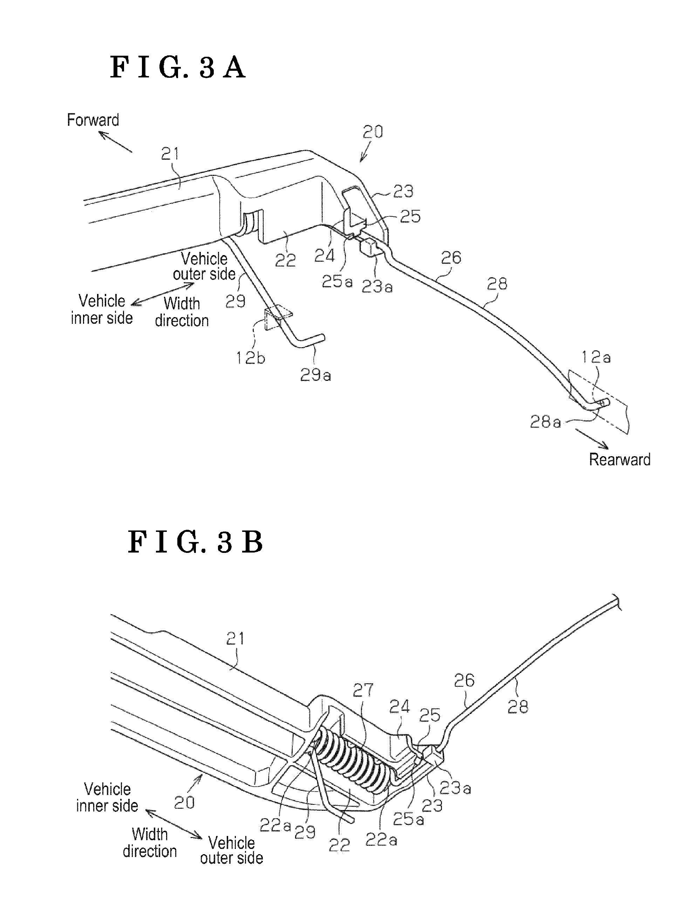

That is, as illustrated in Figs. 3A and 3B, an attaching portion 22 formed in a substantially box shape that opens downwards is formed at each end of the wind deflecting member 21 in the vehicle width direction. A pair of supporting protrusion portions 22a each formed in a substantially cylindrical shape are formed on an inner wall surface of the attaching portion 22 at opposite ends in the vehicle width direction, respectively. That is, the supporting protrusion portions 22a are provided on the inner wall surface of the attaching portion 22 facing each other. The supporting protrusion portions 22a are inserted to be positioned in the opposite ends of the coil portion 27 in the vehicle width direction so that the wind deflecting member 21 supports the coil portion 27.

Further, an outer extension piece 23 that extends in a rearward direction from a vehicle-outside end of the attaching portion 22 is formed at each end of the wind deflecting member 21 in the vehicle width direction. Still further, an inner extension piece 24 that is positioned adjacent to the outer extension piece 23 at a vehicle inner side and extends in a rearward direction from the attaching portion 22 is formed at each end of the wind deflecting member 21 in the vehicle width direction. The length of the extension of the inner extension piece 24 in the rearward direction is determined to be shorter than the length of the extension of the outer extension piece 23 in the rearward direction. The inner extension piece 24 is connected to the outer extension piece 23 by means of a connection piece 25 that protrudes from a lower end of the inside extension pieces 24 to the vehicle outside. A first retaining piece 23a formed in a substantially L-shape is provided to protrude from a rear bottom end of the outer extension piece 23 towards the vehicle inside. A second retaining piece 25a formed in a substantially I-shape is provided to protrude from a middle portion of the connection piece 25 in the vehicle width direction in a downward direction.

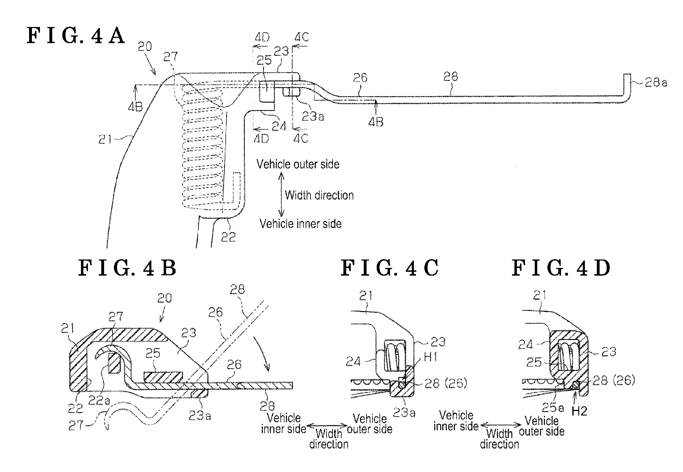

As illustrated in Figs. 4A and 4B, the first retaining piece 23a is positioned at a rearward of the connection piece 25. Further, as illustrated in Figs. 4C and 4D, the outer extension piece 23 forms a lower retaining portion H1 having substantially U-shape in cross-section that opens upward at the first retaining piece 23a. The connection piece 25 forms an upper retaining portion H2 having substantially U-shape in cross-section that opens downwards in association with the outer extension piece 23. The lower and upper retaining portions H1, H2 are in communication with each other in the front-rear direction at substantially the same position in the height direction (substantially the same elevation position). An opening width of each of the lower and upper retaining portions H1, H2 in the vehicle width direction is set to have a dimension substantially the same to a diameter of the wire of the torsion spring 26, that is, a diameter of the arm portion 28.

The arm portion 28 that extends from the vehicle outside end of the coil portion 27 supported by the wind deflecting member 21 by means of the supporting protrusion portions 22a is retained at the wind deflecting member 21 in a state where the arm portion 28 is in contact with an upper surface of the lower retaining portion H1 and a lower surface of the upper retaining portion H2 in an alternating manner. In other words, contact portions of the lower retaining portion H1 and the upper retaining portion H2 relative to the arm portion 28 are staggered from each other, or alternate with each other. Thus, an attitude of the arm portion 28 relative to the wind deflecting member 21 is defined. A rear end of the arm portion 28 is bent towards a vehicle outside in the vehicle width direction to form a support shaft portion 28a. As illustrated in Fig. 3A, the support shaft portion 28a is inserted from a vehicle inner inside to be positioned in a shaft receiving hole 12a having a substantially circular shape and formed on the guide rail 12. The support shaft portion 28a opens in the vehicle width direction. Accordingly, the arm portion 28 is connected to the guide rail 12 to be rotatable about the support shaft portion 28a together with the wind deflecting member 21.

On the other hand, a rear end of the transmission portion 29 that extends in a rearward direction from a vehicle-inner end of the coil portion 27 is formed with a pressure contacting portion 29a that is bent towards the vehicle outer side in the vehicle width direction. The transmission portion 29 transmits the biasing force that the coil portion 27 generates by an elastic contact of the transmission portion 29 onto the upper surface of the guide rail 12. The pressure contacting portion 29a is in contact with the upper surface of the guide rail 12 in a manner being slidable in the front-rear direction. The pressure contacting portion 29a slides on the upper surface of the guide rail 12 in the forward direction in response to the tilting operation of the wind deflecting member 21 in an upward direction. A stopper portion 12b formed in a substantially L-shape is disposed in a protruding manner on the guide rail 12 on a moving locus of the pressure contacting portion 29a in the forward direction of the vehicle. The stopper portion 12b restricts the sliding movement of the pressure contacting portion 29a in the forward direction of the vehicle. That is, the stopper portion 12b restricts the sliding movement of the pressure contacting portion 29a in the forward direction of the vehicle at a predetermined position where the wind deflecting member 21 protrudes higher than the upper surface of the roof 10. Accordingly, the attitude of the wind deflecting member 21 at the tilted state (when moving upward), that is, the deployment state of the deflector 20 for the vehicle is defined by restricting the operation of the pressure contacting portion 29a in the forward direction of the vehicle by means of the stopper portion 12b.

Next, the attaching of each of the torsion springs 26 to the wind deflecting member 21 will be explained as follows. When attaching the torsion spring 26 to the wind deflecting member 21, as indicated with two-dotted chain line in Fig. 4B, first, the arm portion 28 is inserted from the vehicle inside into a clearance formed between the first retaining piece 23a and the connection piece 25 (between lower retaining portion H1 and upper retaining portion H2) in the front-rear direction in a state where the arm portion 28 is tilted and the coil portion 27 is positioned below the attaching portion 22. Then, the position of the arm portion 28 is adjusted so that the attaching portion 22 is positioned on a rotation locus of the coil portion 27 when rotating the arm portion 28 in the clockwise direction about the insertion portion into the clearance.

In the foregoing state, upon the rotation of the arm portion 28 in the clockwise direction about the insertion portion, the coil portion 27 elastically deforms to be shortened in an axial direction (i.e., the vehicle width direction) because of the contact of the supporting protrusion portions 22a to the opposite ends of the coil portion 27, and the coil portion 27 returns to an original shape because of elasticity in the axial direction by the insertion of the supporting protrusion portions 22a to the opposite ends of the coil portion 27. The coil portion 27 is attached to the attaching portion 22 in a state where the opposite ends of the coil portion 27 are supported by the supporting protrusion portions 22a, respectively. In those circumstances, as indicated with a solid line in Fig. 4B, the arm portion 28 comes in contact with the lower surface of the connection pieces 25 (upper retaining portion H2) and comes in contact with the upper surface of the first retaining piece 23a (lower retaining portion H1) at a rearward of the contacting portion with the connection piece 25. Thus, the attitude of the arm portion 28 relative to the wind deflecting member 21 is defined. Accordingly, the torsion spring 26 is attached to the wind deflecting member 21.

According to the embodiment described above, the following effects and advantages can be attained.

First, according to the construction of the embodiment, because each of the arm portions 28 is formed with one of the leg portion of the torsion spring 26 made from an iron-made wire, the cross sectional dimension of the arm portion 28 can be reduced without causing a lack of the strength. Thus, the space occupied by the arm portions 28 can be reduced, and the deflector device 20 for the vehicle can be downsized.

Further, because the cross-sectional dimension of each of the arm portions 28 is further reduced, for example, a water drop that is attached to the wind deflecting member 21 can be restrained from being transmitted to a portion other than a drain portion from the arm portion 28. Further, because the arm portion 28 is made of iron, mass of the arm portion 28 can be further reduced while maintaining the strength substantially the same to known arm portions made of resin.

According to the embodiment, because the sliding motion of each of the transmission portion 29 (pressure contacting potion 29a) is restricted, or stopped by the stopper portion 12b at the predetermined position where the wind deflecting member 21 protrudes higher than the upper surface of the roof 10, the attitude of the wind deflecting member 21 in the deployment state can be further stabilized.

According to the embodiment, because the deflector device 20 for the vehicle is constructed with the wind deflecting member 21 and the torsion springs 26 serving as a pair, the number of parts can be reduced, and thus manufacturing costs can be reduced.

According to the embodiment, because the wind deflecting member 21 is provided independently from the arm portions 28, the length of the wind deflecting member 21 in the front-rear direction can be further shortened. Then, a resin molding die of the wind deflecting member 21 can be further downsized in the front-rear direction, accordingly.

According to the embodiment, the torsion spring 26 is attached to the wind deflecting member 21 only by attaching the attaching portion 22 to the coil portion 27 by rotating the arm portion 28 in a state where the arm portion 28 is positioned in the clearance formed between the first retaining piece 23a and the connection piece 25 (between the lower retaining portion H1 and the upper retaining portion H2), the assembling performance (assembling workability) can be enhanced.

The construction of the embodiment may be modified as described below. According to an alternative construction, the stopper portion 12b of the guide rail 12 may be omitted. According to an alternative construction, the torsion spring 26 may be made of metal other than iron.

According to an alternative construction, the coil portion 27 of the torsion spring 26 may not be accommodated in the wind deflecting member 21 (attaching portion 22). In this case, the torsion spring 26 may be attached to the wind deflecting member via an appropriate attaching member.

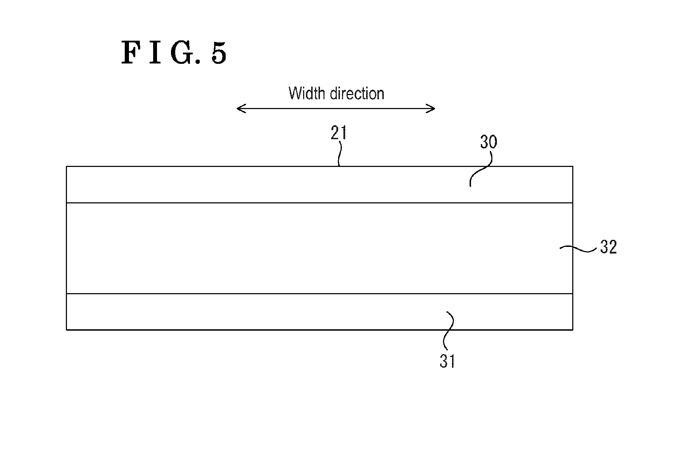

According to another embodiment, as illustrated in Fig. 5, a wind deflecting member 21, which includes an upper frame 30 and a lower frame 31 that extends along a front rim portion at the opening 10a in the vehicle width direction, and a mesh member 32 having opposite end portions in a transverse direction being placed, or embedded onto (buried into) the upper frame and the lower frame, respectively, may be adopted. In those circumstances, the torsion spring is attached to the upper frame 30, the lower frame 31 is fixed to the roof, and the wind deflecting member 21 may be protruded above the upper surface of the roof by expanding the mesh member 32 in response to the tilting operation of the upper frame 30 in an upward direction by means of the biasing force of the torsion spring.

## Claims

1. A deflector device (20) for a vehicle, comprising:
a wind deflecting member (21) provided along a front rim portion at an opening (10a) formed on a roof (10) to extend in a vehicle width direction;
a pair of torsion springs (26) made from metal-made wires and attached to opposite ends of the wind deflecting member (21) in the vehicle width direction, respectively, each of the torsion springs (26) including a first leg portion extending in a rearward direction and serving as an arm portion (28) rotatably connected to the roof (10) at a rear end of the arm portion (28), and a second leg portion serving as a transmission portion (29) elastically in contact with the roof (10) to transmit a biasing force to protrude the wind deflecting member (21) higher than an upper surface of the roof (10).

2. The deflector device (20) for the vehicle according to claim 1 further comprising:
a stopper portion (12b) provided at the roof (10) and restricting a sliding movement of the transmission portion (29) at a predetermined position where the wind deflecting member (21) protrudes higher than the upper surface of the roof (10); wherein
the transmission portion (29) transmits the biasing force to protrude the wind deflecting member higher than the upper surface of the roof (10) while sliding on the roof (10).

3. The deflector device (20) for the vehicle according to claim 1, wherein the torsion spring (26) includes a coil portion (27) that is accommodated in the wind deflecting member (21).

4. The deflector device (20) for the vehicle according to claim 1, wherein the wind deflecting member (21) includes an upper frame (30) and a lower frame (31) that extends along the front rim portion at the opening (10a) in the vehicle width direction, and a mesh member (32) having opposite end portions in a transverse direction being placed on the upper frame and the lower frame, respectively.

5. The deflector device (20) for the vehicle according to claim 4, wherein the torsion spring (26) is attached to the upper frame (30), the lower frame (31) is fixed to the roof (10), and the wind deflecting member (21) is protruded to be higher than the upper surface of the roof (10) by expanding the mesh member (32) in response to moving the upper frame upward by means of the biasing force of the torsion spring (26).
